(19) Europäisches Patentamt
European Patent Office
Office européen des brevets

(11) EP 3 083 908 B1

(12) # FASCICULE DE BREVET EUROPEEN

(45) Date de publication et mention de la délivrance du brevet:
**21.07.2021 Bulletin 2021/29**

(21) Numéro de dépôt: **14823897.5**

(22) Date de dépôt: **12.12.2014**

(51) Int Cl.:
*C10M 173/02* (2006.01) *C10M 107/50* (2006.01)
*B29C 37/00* (2006.01) *B29C 33/64* (2006.01)
*B29D 30/06* (2006.01) *C10N 10/02* (2006.01)
*C10N 10/06* (2006.01) *C10N 20/02* (2006.01)
*C10N 30/06* (2006.01) *C10N 40/36* (2006.01)

(86) Numéro de dépôt international:
**PCT/EP2014/003339**

(87) Numéro de publication internationale:
**WO 2015/090547 (25.06.2015 Gazette 2015/25)**

(54) **PROCÉDÉ DE LUBRIFICATION**

SCHMIERVERFAHREN

LUBRICATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2013 FR 1302948**

(43) Date de publication de la demande:
**26.10.2016 Bulletin 2016/43**

(73) Titulaire: **ELKEM SILICONES France SAS**
**69003 Lyon (FR)**

(72) Inventeurs:
- **BREUNIG, Stefan**
**F-38200 Villette de Vienne (FR)**
- **GUICHARD, Gérald**
**F-69700 Givors (FR)**
- **BORDAS, Jérôme**
**F-69800 St Priest (FR)**

(74) Mandataire: **Mekki, Boualem et al**
**Elkem Silicones France SAS**
**Industrial Property Department**
**55, rue des Frères Perret**
**69192 Saint Fons (FR)**

(56) Documents cités:
**EP-A1- 0 022 706 FR-A1- 2 887 895**

- **None**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 083 908 B1

## Description

La présente invention concerne un procédé de lubrification d'une vessie en caoutchouc dilatable utile lors d'une vulcanisation d'un pneu cru au sein d'une presse métallique caractérisé en ce que des compositions sous forme d'émulsions d'huiles silicones sont appliquées sur la surface interne des pneumatiques crus et/ou à la surface externe des vessies de vulcanisation pour en faciliter le moulage-démoulage lors de la fabrication des dits-pneumatiques.

La fabrication d'un pneumatique comporte principalement trois étapes à savoir la préparation des produits semi-finis, l'assemblage de ces derniers et la cuisson de l'enveloppe.

La préparation des produits semi-finis consiste à élaborer les constituants de l'enveloppe : gommes, nappes textiles et métalliques, tringles.

L'étape d'assemblage consiste à superposer les différents produits semi-finis, en vue de constituer le pneumatique. La carcasse, constituée de différentes couches internes : gomme intérieure, nappe carcasse, tringles, et toutes les nappes de gommes, est placée sur un cylindre au diamètre du pneu : le tambour. Après conformation, le tambour faisant prendre à la carcasse son aspect torique, les nappes de ceinture et la bande de roulement sont posées : un pneu cru, enveloppe non vulcanisée et non façonnée, encore plastique est obtenu. A la fin de l'étape d'assemblage, le futur pneumatique est aussi appelé bandage cru ou enveloppe crue. Sa cohésion est garantie simplement par le collant à cru des produits.

Enfin, la cuisson fait passer le pneu de l'état plastique à l'état élastique grâce à la constitution de ponts de soufre entre les chaînes d'élastomères : c'est la vulcanisation. La cuisson crée la structure composite entre les différents éléments de l'enveloppe. Les mélanges collent entre eux, les nappes et les fils se mêlent. La vulcanisation en moule se réalise dans des presses métalliques en utilisant l'action combinée de la chaleur et de la pression. Le bandage cru ou pneu cru est chauffé simultanément à l'extérieur, par exemple avec de la vapeur circulant à l'intérieur des parois du moule et à l'intérieur, en règle générale avec un fluide chaud sous pression contenu dans une membrane de caoutchouc, appelée aussi vessie dilatable.

Le fluide chaud tel qu'un gaz chaud, de l'eau chaude et/ou de la vapeur, participe au transfert de chaleur pour la vulcanisation.

La pression généralement supérieure à 10 bars, usuellement entre 15 et 25 bars, sert à comprimer le pneumatique de l'intérieur et à l'appliquer contre le moule de façon à ce qu'il puisse prendre la forme, les sculptures et les inscriptions qui ont été gravées dans le dit-moule métallique.

Le temps de vulcanisation varie en fonction des dimensions du pneumatique, des techniques opératoires et des mélanges utilisés: il est d'environ 15 minutes pour un pneumatique de voiture automobile et peut atteindre 24 heures ou plus pour des gros pneumatiques destinés aux engins de terrassement. La température de vulcanisation est en général comprise entre 80 et 220°C.

Cette opération fait perdre au mélange de caoutchouc sa plasticité initiale en lui donnant des propriétés élastiques stables.

L'enveloppe est alors partiellement refroidie dans le moule, ce refroidissement étant parfois favorisé par l'introduction d'eau froide ou plus fraîche dans la vessie. Puis le moule est ouvert et la vessie est dégonflée en relâchant la pression du fluide interne et le pneu vulcanisé est retiré de la presse. Cette utilisation des vessies de vulcanisation est bien connue dans la technique.

Il est admis qu'il se produit un mouvement relatif notable entre la surface de contact externe de la vessie et la surface interne de l'enveloppe crue au cours de la phase de dilatation de la vessie avant la vulcanisation complète de l'enveloppe. De même, il se produit également un mouvement relatif considérable entre la surface de contact externe de la vessie et la surface interne de l'enveloppe moulée et vulcanisée, et cela au cours du dégonflement de la vessie et de l'extraction du pneumatique.

Si une lubrification adéquate n'est pas prévue entre la vessie et la surface interne de l'enveloppe, la vessie a généralement tendance à se gondoler, ce qui entraîne une déformation de l'enveloppe dans le moule et aussi une usure et un dépolissage excessifs de la surface de la vessie elle-même. La surface de la vessie tend également à coller sur la surface interne de l'enveloppe pendant la cuisson. Après la vulcanisation de l'enveloppe et notamment au cours de la partie finale du cycle de vulcanisation de l'enveloppe au cours de laquelle la vessie est dégonflée, celle-ci reste alors indissociablement collé sur le pneumatique.

Il s'agit de démouler deux surfaces en caoutchouc à savoir la surface interne du pneu vulcanisé de la surface externe de la vessie et non pas la surface externe du pneu vulcanisé de la surface interne du moule métallique. EP022706 décrit un agent pour le moulage d'objets en caoutchouc à déposer sur la surface externe de l'ébauche en caoutchouc en contact avec le moule.

De plus, la vessie doit pouvoir être réutilisée sans nouveau traitement pour d'autres cycles moulage/démoulage. Pour cette raison, la surface externe de la vessie ou la surface interne de l'enveloppe crue ou non vulcanisée est revêtue d'un lubrifiant ou agent de démoulage approprié.

L'utilisation d'un agent de démoulage, multi-démoulages, permet aux fabricants de pneumatiques d'améliorer la productivité en réduisant la vitesse d'apparition des défauts et en diminuant la fréquence des traitements par le dit-agent de démoulage.

La lubrification de la vessie de vulcanisation utilisée lors du façonnage et de la vulcanisation des pneus crus peut être réalisée de deux façons différentes.

La vessie en caoutchouc dilatable utilisée lors de la vulcanisation des pneus crus est initialement revêtue d'une composition lubrifiante. La lubrification de la vessie est directe.

De façon différente, l'agent de démoulage est appliqué sur l'intérieur du pneu cru qui sera en contact avec la vessie dilatable. Puis, le pneu cru est introduit à l'intérieur de la presse. Le moule est refermé et la vessie est gonflée. L'agent de démoulage assure le centrage optimal de la vessie à l'intérieur du pneu ce qui est nécessaire à l'obtention de pneus parfaitement symétriques. Il aide aussi à éviter des défauts de la vessie tels que des pincements et des plissements. Quand le moule métallique est fermé et la vessie totalement déployée, la température est augmentée jusqu'à 220°C. Durant cette phase, l'agent de démoulage doit être résistant à la température et doit transférer, de la face interne du pneu sur la face externe de la vessie. Ce transfert est souhaitable pour augmenter le nombre de démoulages successifs sans nouvelle application de l'agent de démoulage. Le pneu est vulcanisé dans la presse fermée, avec la vessie complétement déployée par un fluide sous pression et cela entre 150 et 220°C. Durant cette étape, le pneu ne doit pas coller à la vessie. Le film d'agent de démoulage forme la barrière nécessaire entre le pneu et la vessie. L'effet anti-collage de l'agent de démoulage est assuré par la création d'une couche continue de séparation entre la vessie et la face interne du pneu. C'est la fonction principale d'un agent de démoulage de vessie. Si la barrière a des défauts, la vulcanisation du pneu peut s'effectuer sur le caoutchouc de la vessie, rendant la séparation des deux, impossible sans rupture destructrice. Après vulcanisation, la vessie est dégonflée. L'agent de démoulage doit assurer l'effet anti-collage, permettant à la vessie de se décoller du pneu. L'agent de démoulage permettant plusieurs démoulages n'est pas appliqué sur chaque pneu. Il doit donc avoir une durabilité élevée. La durabilité de la couche d'agent de démoulage est ce qui rend l'agent de démoulage, multi-démoulages. L'agent de démoulage est à nouveau appliqué après un certain nombre de cycles de moulage/démoulage.

L'avantage de l'application de l'agent de démoulage sur l'intérieur du pneu cru est que celle-ci s'effectue en dehors de la presse évitant ainsi toute pollution intempestive de celle-ci.

Les compositions silicones réticulables en élastomère pour faciliter le moulage-démoulage lors de la fabrication de pneumatiques sont connues.

Ainsi les brevets EP1240283, EP1495076 et la demande de brevet EP2038354 concernent des compositions lubrifiantes à base de siloxanes capables de réticuler par polycondensation et ne dégageant donc pas d'hydrogène. La demande de brevet EP1899447 et le brevet US4840742 concernent des compositions silicones capables de réticuler par deshydrogénocondensation. Toutefois, la présence de charge de type mica favorable à l'évacuation d'air lors de l'étape de façonnage et de vulcanisation des pneumatiques a tendance à diminuer le nombre de démoulages envisageable avant une nouvelle réapplication sur le pneu cru et/ou sur la vessie dilatable.

La lubrification et la durabilité de la vessie en caoutchouc dilatable utilisée lors de l'étape de vulcanisation des pneus crus dans une presse métallique doit être sans cesse améliorée pour augmenter le nombre de démoulages entre deux applications.

Un objectif de la présente invention est de fournir un procédé de traitement d'une vessie en caoutchouc dilatable au sein d'une presse métallique permettant d'obtenir une vessie répondant simultanément à ces besoins à savoir des propriétés de glissement et de résistance aux démoulages successifs améliorés.

A cet effet, le premier objet de l'invention concerne un procédé de lubrification d'une vessie en caoutchouc dilatable utile lors d'une vulcanisation d'un pneu cru au sein d'une presse métallique, caractérisé en ce que la surface externe de la dite-vessie en caoutchouc dilatable amenée à être en contact avec la face interne du dit-pneu cru, est revêtue d'une composition d'agent de démoulage **(I)** sous forme d'émulsion huile dans eau comprenant :

- **(a)** au moins un polyorganosiloxane réactif **(A)** comportant par molécule au moins deux groupements silanols ≡SiOH ;
- **(b)** au moins un agent réticulant **(B)** ayant, par molécule, au moins trois motifs ≡SiH ;
- **(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
- **(d)** de 0,1 à 20 parties en poids de billes de verre **(D)** en tant que charge amorphe sphérique par rapport au poids total de la composition,
- **(e)** au moins un tensioactif **(E)** ;
- **(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
- **(g)** éventuellement au moins un catalyseur de déshydrogéno-condensation **(G),** et
- **(h)** de l'eau **(H),**

les quantités de tensioactif(s) et d'eau étant suffisantes pour l'obtention d'une émulsion huile-dans-eau;
le dit-procédé permettant ainsi d'obtenir une vessie en caoutchouc dilatable lubrifiée sur sa face externe et conduisant à plusieurs cycles de moulage de pneu cru et de démoulage de pneu vulcanisé.

La vessie traitée selon le procédé de l'invention présente simultanément d'excellentes propriétés de glissement et de durabilité.

Selon un autre mode de réalisation, le procédé de lubrification d'une vessie en caoutchouc dilatable utile lors d'une vulcanisation d'un pneu cru au sein d'une presse métallique, est caractérisé en ce que dans une premières étape et à l'extérieur de la presse, la surface interne du dit-pneu cru est revêtue d'une composition d'agent de démoulage **(I)** sous forme d'émulsion huile dans eau comprenant :

**(a)** au moins un polyorganosiloxane réactif **(A)** comportant par molécule au moins deux groupements ≡SiOH ;
**(b)** au moins un agent réticulant **(B)** ayant, par molécule, au moins trois motifs ≡SiH ;
**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
**(d)** de 0,1 à 20 parties en poids de billes de verre **(D)** en tant que charge amorphe sphérique, par rapport au poids total de la composition ;
**(e)** au moins un tensioactif **(E)** ;
**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
**(g)** éventuellement au moins un catalyseur de déshydrogéno-condensation **(G),** et
**(h)** de l'eau **(H),**

les quantités de tensioactif(s) et d'eau étant suffisantes pour l'obtention d'une émulsion huile-dans-eau;
permettant ainsi d'obtenir un pneu cru dont la surface interne est revêtue de la dite-composition **(I)** et
lors d'une étape ultérieure au sein de la presse métallique, le pneu cru dont la surface interne est revêtue de la composition **(I)** est mis en contact avec une vessie en caoutchouc dilatable ;
le dit-procédé permettant ainsi d'obtenir par transfert une vessie en caoutchouc dilatable lubrifiée sur sa face externe et conduisant à plusieurs cycles de moulage de pneu cru et de démoulage de pneu vulcanisé.

Le nombre de cycles de moulage de pneu cru et de démoulage de pneu vulcanisé est strictement supérieur à 8 et est plus particulièrement compris entre 10 et 20.

La composition d'agent de démoulages **(I)** peut être obtenue par mélange d'émulsions contenant comme constituants majoritaires les constituants **(A), (B)** et **(C)** seuls ou en mélange.

Pour décrire les polyorganosiloxanes, on parle de motifs M, D, T, Q. La lettre M représente l'unité monofonctionelle de formule $(CH_3)_3SiO_{1/2}$, l'atome de silicium étant relié à un seul atome d'oxygène dans le polymère comprenant cette unité. La lettre D signifie une unité difonctionnelle $(CH_3)_2SiO_{2/2}$ dans laquelle l'atome de silicium est relié à deux atomes d'oxygène. La lettre T représente une unité trifonctionnelle de formule $(CH_3)SiO_{3/2}$, dans laquelle l'atome de silicium est relié à trois atomes d'oxygène. La lettre Q représente une unité trifonctionnelle de formule $SiO_{4/2}$, dans laquelle l'atome de silicium est relié à quatre atomes d'oxygène. Les motifs M, D, T peuvent être fonctionnalisés ce qui a pour conséquence le remplacement d'un ou plusieurs radical $CH_3$ par un autre radical tel que mentionné ci-dessus. On parle alors de motifs M, D, T tout en précisant les radicaux spécifiques.

De préférence, le polyorganosiloxane réactif **(A)** de la composition d'agent de démoulage **(I)** comprend les motifs siloxyles suivants :

$$M^{OH} = [(OH)(R^2)_2SiO_{1/2}]$$

et

$$D= [R^3R^4SiO_{2/2}]$$

dans lesquels:
$R^2$, $R^3$ et $R^4$ sont des radicaux, identiques ou différents, choisis parmi le groupe constitué par :

- les radicaux alkyles linéaires ou ramifiés en $C_1$-$C_6$ tels que par exemple méthyle, éthyle, propyle, isopropyle, butyle, isobutyle, t-butyle, n-pentyle, n-hexyle,
- les radicaux cycloalkyles en $C_3$-$C_8$ tels que par exemple cyclopentyle, cyclohexyle,

- les radicaux aryles en $C_6$-$C_{10}$ tels que par exemple phényle, naphtyle et
- les radicaux alkylaryles en $C_7$-$C_{15}$ tels que par exemple tolyle, xylyle.

De façon encore plus préférentielle, le polyorganosiloxane réactif **(A)** de la composition d'agent de démoulage **(I)** est un a, w-bis(hydroxy) polydimethylsiloxane.

De préférence, le polyorganosiloxane réactif **(A)** présente une viscosité dynamique comprise entre 50 et 600000 mPa.s à 25°C ou une consistance comprise entre 200 et 2000 exprimée en dixièmes de millimètres à 25°C.
La viscosité dynamique des silicones est mesurée à 25°C selon la norme ASTM D 445.
Le terme gomme est utilisé pour des composés organosiliciques présentant des viscosités classiquement supérieures à ~600000 mPa.s ce qui correspond à un poids moléculaire supérieur à 260000 g/mole.
La consistance ou pénétrabilité d'une gomme est déterminée à 25°C au moyen d'un pénétromètre de type PNR12 ou modèle équivalent permettant d'appliquer sur l'échantillon une tête cylindrique dans des conditions normalisées.
La pénétrabilité d'une gomme est la profondeur exprimée en dixième de millimètres à laquelle un cylindre calibré pénètre dans l'échantillon pendant une minute.
A cet effet, un échantillon de gomme est introduit dans un godet en aluminium de diamètre 40 mm et d'une hauteur de 60 mm.
La tête cylindrique en bronze ou en laiton mesure 6,35 mm de diamètre et 4,76 mm de hauteur et est portée par une tige métallique de 51 mm de long et de 3mm de diamètre qui s'adapte au pénétromètre. Cette tige est lestée d'une surcharge de 100 g. Le poids total de l'ensemble est de 151,8g dont 4,3 pour la pièce cylindrique et sa tige support.
Le godet contenant l'échantillon de gomme est mis dans le bain thermostaté à 25 ± 0,5 °C pendant au minimum 30mn.
La mesure est effectuée en suivant la notice du constructeur. Les valeurs de la profondeur (V) en dixième de millimètre et du temps (t) en secondes pour atteindre cette profondeur sont indiquées sur l'appareil.
La pénétrabilité est égale à 60V/t exprimée en dixièmes de millimètre par minute.
Les gommes de silicone utilisables conformément à l'invention sont utilisées seules ou en mélange dans un solvant inorganique. Ce solvant peut être choisi parmi les silicones volatiles, l'octamethylcyclotetrasiloxane (D4), le decamethylcylopentasiloxane (D5), les huiles polydiméthylsiloxanes (PDMS), les huiles polyphénylméthylsiloxanes (PPMS) ou leurs mélanges et cela afin d'éviter l'utilisation de solvants organiques préjudiciables à l'environnement et à la santé des travailleurs des ateliers de fabrication des pneumatiques.

Une huile α, w-bis(hydroxy) polydimethylsiloxane de viscosité dynamique comprise entre 50 et 600000 mPa.s à 25°C et une gomme α, w-bis(hydroxy) polydimethylsiloxane de consistance comprise entre 200 et 2000 exprimée en dixièmes de millimètres à 25°C sont préférentiellement utilisées en tant que constituants **(A).**

De préférence l'agent réticulant **(B)** de la composition d'agent de démoulage **(I)** est choisi parmi ceux qui possèdent au moins un motif de formule (II) et qui sont terminés par des motifs de formule (III) ou des cycliques constitués de motifs de formule (II) représentées ci-dessous :

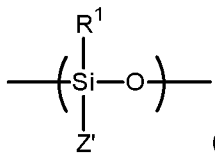
(II)
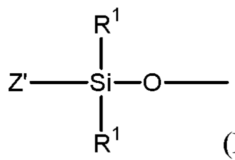
(III)

dans lesquelles :

- les symboles $R^1$, sont identiques ou différents et représentent :

  o un radical alkyle linéaire ou ramifié contenant 1 à 8 atomes de carbone, non substitué ou substitué par au moins un fluor,
  o un radical cycloalkyle contenant entre 5 et 8 atomes de carbone cycliques, ou
  o un radical aryle contenant entre 6 et 12 atomes de carbone,
  o un radical aralkyle ayant une partie alkyle contenant entre 7 et 14 atomes de carbone et une partie aryle contenant entre 6 et 12 atomes de carbone, non substitué ou substitué sur la partie aryle par des halogènes, des alkyles et/ou des alcoxyles contenant 1 à 3 atomes de carbone,

- les symboles Z' sont semblables ou différents et représentent :

  o un radical hydrogène, ou
  o un groupement répondant à la même définition que celle donnée ci-dessus pour $R^1$,

avec par molécule, au moins trois des symboles Z' représentant un radical hydrogène H.

Comme exemple d'agent réticulant **(B)** on peut citer le composé de formule (IV) suivante :

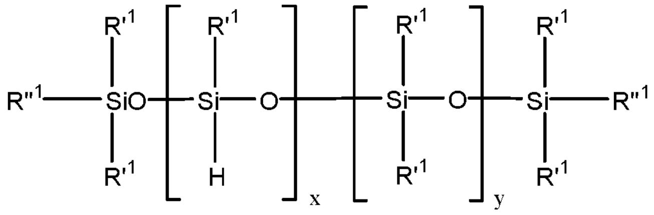

(IV)

dans laquelle :

- x représente un nombre entier ou fractionnaire variant entre 1 et 10000,
- y représente un nombre entier ou fractionnaire variant entre 0 et 10000,
- $R'^1$ et $R''^1$ représentent indépendamment l'un de l'autre :

    · un radical alkyle linéaire ou ramifié contenant 1 à 8 atomes de carbone, non substitué ou substitué par au moins un halogène, de préférence le fluor, les radicaux alkyles étant de préférence méthyle, éthyle, propyle, octyle et 3,3,3-trifluoropropyle,
    · un radical cycloalkyle contenant entre 5 et 8 atomes de carbone cycliques,
    · un radical aryle contenant entre 6 et 12 atomes de carbone,
    · un radical aralkyle ayant une partie alkyle contenant entre 5 et 14 atomes de carbone et une partie aryle contenant entre 6 et 12 atomes de carbone, non substitué ou substituée sur la partie aryle,

- $R''^1$ pouvant également correspondre à l'hydrogène, et

avec la condition selon laquelle le polyorganosiloxane comprend au moins trois motifs ≡SiH.

Conviennent tout particulièrement à l'invention à titre d'agent réticulant **(B)** les composés suivants :

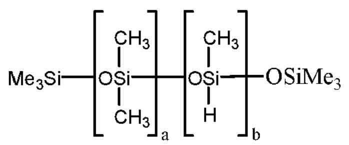

S1

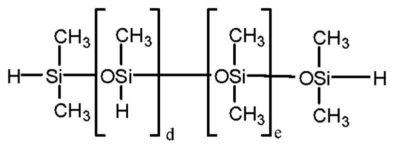

S2

avec a, b, d et e représentant un nombre variant de :

- dans le polymère de formule S1 :

    $0 \leq a \leq 10000$ de préférence $0 \leq a \leq 8000$ de préférence $0 \leq a \leq 5000$, et
    $3 \leq b \leq 10000$ de préférence $10 \leq b \leq 100$ de préférence $20 \leq b \leq 60$

- dans le polymère de formule S2 :

    $1 \leq d \leq 10000$ de préférence $20 \leq d \leq 60$, et
    $0 \leq e \leq 10000$ de préférence $0 \leq e \leq 1000$.

Dans le cadre de l'invention, on entend par "non réactive" une huile qui dans les conditions d'émulsification, de préparation de la composition lubrifiante et d'utilisation, ne réagit chimiquement avec aucun des constituants de la composition.

De préférence l'huile polyorganosiloxane linéaire non réactive **(C)** présente une viscosité dynamique de l'ordre de 0,65 à 100000 mPa.s à 25°C. Comme exemple, on peut citer les polyorganosiloxanes linéaires :

- constitués le long de chaque chaîne :

- des motifs de formule $R^5R^6SiO_{2/2}$, éventuellement associés à des motifs de formule $(R^5)_2SiO_{2/2}$,
- des motifs de formule $(R^6)_2SiO_{2/2}$, éventuellement associés à des motifs de formule $(R^5)_2SiO_{2/2}$,
- des motifs de formule $R^5R^6SiO_{2/2}$ et des motifs de formule $(R^6)_2SiO_{2/2}$, éventuellement associés à des motifs de formule $(R^5)_2SiO_{2/2}$,

- et bloqués à chaque extrémité de chaîne par un motif de formule $(R^7)_3SiO_{1/2}$ dont les radicaux $R^7$, identiques ou différents, sont choisis parmi des radicaux $R^5$ et $R^6$ ;
- où les radicaux $R^5$ et $R^6$, substituants organiques monovalents des divers motifs siloxyles mentionnés supra, ont les définitions suivantes :

  - les radicaux $R^5$, identiques ou différents entre eux, sont choisis parmi :

    - les radicaux alkyles linéaires en $C_1$-$C_6$ ou ramifiés en $C_3$-$C_6$ tels que par exemple méthyle, éthyle, propyle, isopropyle, butyle, isobutyle, t-butyle, n-pentyle, n-hexyle,
    - les radicaux cycloalkyles en $C_3$-$C_8$ tels que par exemple cyclopentyle, cyclohexyle, et
    - les radicaux alcényles linéaires en $C_2$-$C_8$ ou ramifiés en $C_3$-$C_8$ tels que par exemple vinyle, allyle,

  - les radicaux $R^6$, identiques ou différents entre eux, sont choisis parmi :

    - les radicaux aryles en $C_6$-$C_{10}$ tels que par exemple phényle, naphtyle,
    - les radicaux alkylaryles en $C_7$-$C_{15}$ tels que par exemple tolyles, xylyle, et
    - les radicaux arylalkyles en $C_7$-$C_{15}$ tels que par exemple benzyle.

La composition chimique des billes de verre **(D)** est de type sodocalcique ou borosilicate. La majeure partie des verres de fabrication industrielle appartient au type sodocalcique, soda-lime glass pour les anglophones. Celui-ci se compose majoritairement de 71 à 75% de sable (SiO2), de 12 à 16% de soude (Na2O) et de 8 à 15% de calcaire (CaO). Les verres borosilicates, boro-silicate pour les anglophones, se distinguent des verres sodocalciques par la présence d'oxyde de bore ($B_2O_3$) et d'oxyde d'aluminium ($Al_2O_3$).

Le verre est un matériau amorphe, c'est-à-dire non cristallin. De ce fait, il présente un désordre structural important. Sa structure microscopique est telle qu'il n'existe aucun ordre à grande distance dans un verre.

Il s'agit de billes de verre pleines c'est-à-dire non creuses. Elles peuvent être revêtues en surface par des agents de couplage de type silanes.

De préférence, les billes de verre **(D)** présentent les caractéristiques suivantes :

- un diamètre moyen des particules mesuré selon la norme ISO 13320 compris entre 0,1 et 150 $\mu$m
- une densité apparente mesurée selon ASTM D 3101-78 comprise entre 1000 et 2000 kg/$m^3$, et
- une absorption d'huile mesurée selon ASTM D-1483 comprise entre 10 et 30 g d'huile pour 100g de sphères.

De façon encore plus préférentielle, les billes de verre **(D)** présentent les caractéristiques suivantes :

- un diamètre moyen des particules mesuré selon la norme ISO 13320 compris entre 0,5 et 100 $\mu$m,
- une densité apparente selon ASTM D 3101-78 comprise entre 1200 et 1800 kg/$m^3$, et
- une absorption d'huile selon ASTM D-1483 comprise entre 15 et 25 g d'huile pour 100g de sphères.

De façon encore plus préférentielle, les bille de verre (D) présentent un diamètre moyen mesuré selon la norme ISO 13320 compris entre 12 et 70$\mu$m.

La quantité de billes de verre dans la composition d'agent de démoulage **(I)** varie entre 0,1 et 20 parties en poids et de préférence entre 0,1 et 15 parties en poids par rapport au poids total de la composition.

La nature de tensioactif **(E)** sera facilement déterminée par l'homme du métier, l'objectif étant de préparer une émulsion stable. Les tensioactifs anioniques, cationiques, non-ioniques et zwitterioniques peuvent être employés seuls ou en mélange.

Il est à noter que la composition **(I)** selon l'invention peut aussi comprendre des colloïdes protecteurs tels que l'acool polyvinylique.

A titre de tensioactif anionique, on peut mentionner les agents tensio-actifs suivants :

- les alkylesters sulfonates de formule $R^a$-CH($SO_3$M)-COOR$^b$, où $R^a$ représente un radical alkyle en $C_8$-$C_{20}$, de préférence en $C_{10}$-$C_{16}$, $R^b$ un radical alkyle en $C_1$-$C_6$, de préférence en $C_1$-$C_3$ et M un cation alcalin (sodium, potassium, lithium), ammonium substitué ou non substitué (méthyl-, diméthyl-, triméthyl-, tétraméthylammonium,

diméthylpiperidinium) ou dérivé d'une alcanolamine (monoéthanolamine, diéthanolamine, triéthanolamine),

- les alkylsulfates de formule $R^cOSO_3M$, où $R^c$ représente un radical alkyle ou hydroxyalkyle en $C_{10}$-$C_{24}$, de préférence en $C_{12}$- $C_{20}$, M représentant un atome d'hydrogène ou un cation de même définition que ci- dessus, ainsi que leurs dérivés éthoxylénés (OE) et/ou propoxylénés (OP), présentant de préférence de 1 à 20 motifs OE,
- les alkylamides sulfates de formule $R^dCONHR^eOS0_3M$ où $R^d$ représente un radical alkyle en $C_2$-$C_{22}$, de préférence en $C_6$-$C_{20}$, $R^e$ un radical alkyle en $C_2$-$C_3$, M représentant un atome d'hydrogène ou un cation de même définition que ci-dessus, ainsi que leurs dérivés éthoxylénés (OE) et/ou propoxylénés (OP), présentant de préférence 1 à 20 motifs OE,
- les sels d'acides gras saturés ou insaturés en $C_8$-$C_{24}$, de préférence en $C_{14}$-$C_{20}$, les alkylbenzènesulfonates en $C_9$-$C_{20}$, ainsi que leurs dérivés éthoxylénés (OE) et/ou propoxylénés (OP), présentant de préférence 1 à 20 motifs OE, - les alkylbenzènesulfonates en $C_9$-$C_{20}$, les alkylsulfonates primaires ou secondaires en $C_8$-$C_{22}$, les alkylglycérol sulfonates, les acides polycarboxyliques sulfonés décrits dans GB-A-1 082 179, les sulfonates de paraffine, les N-acyl N-alkyltaurates, les mono- et dialkylphosphates, les alkyliséthionates, les alkylsuccinamates, les alkylsulfosuccinates, les monoesters ou diesters de sulfosuccinates, les N-acyl sarcosinates, les sulfates d'alkylglycosides, les polyéthoxycarboxylates, le cation étant un métal alcalin (sodium, potassium, lithium), un reste ammonium substitué ou non substitué (méthyl-, diméthyl-, triméthyl-, tétraméthylammonium, diméthylpiperidinium) ou dérivé d'une alcanolamine (monoéthanolamine, diéthanolamine, triéthanolamine).

A titre de tensioactifs non-ioniques on peut citer les éthers alkyliques ou aryliques de poly(oxyde d'alkylène), l'hexastéarate de sorbitan polyoxyéthyléné, l'oléate de sorbitan polyoxyéthyléné et les éthers de cétylstéaryle et de poly(oxyde d'éthylène). A titre d'éther arylique de poly(oxyde d'alkylène), on peut mentionner les alkylphénols polyoxyéthylénés. A titre d'éther alkylique de poly(oxyde d'alkylène), on peut mentionner l'éther isodécylique de polyéthylèneglycol et l'éther triméthylnonylique de polyéthylèneglycol contenant de 3 à 15 unités d'oxyde d'éthylène par molécule.

On peut aussi citer à titre d'exemple de tensioactifs: les tensioactifs fluorés ioniques, non ioniques ou amphotères et leurs mélanges, par exemple:

- les perfluoroalkyles,
- les perfluorobétaïnes,
- les polyfluoroalcools éthoxylés,
- les polyfluoroalkyles d'ammonium,
- les agents tensioactifs dont la partie hydrophile contient un ou plusieurs motif(s) saccharide(s) porteur(s) de cinq à six atomes de carbone et dont la partie hydrophobe contient un motif de formule $R^f(CH_2)_n$-, dans laquelle n = 2 à 20 et Rf représente un motif perfluoroalkyle de formule $C_mF_{2m+1}$, dans laquelle m = 1 à 10; et
- les polyélectrolytes présentant des groupements latéraux perfluoroalkyles gras.

Par agent tensioactif fluoré, on entend, comme cela est parfaitement connu en soi, un composé formé d'une partie perfluorocarbonée aliphatique, comprenant au moins trois atomes de carbone, et une partie hydrophile, ionique, non ionique ou amphotère. La partie perfluorocarbonée d'au moins trois atomes de carbone peut représenter, soit l'ensemble, soit une fraction seulement de la partie fluorocarbonée de la molécule. Concernant ce type de composé, on trouve dans la littérature un grand nombre de références. L'homme du métier pourra se reporter notamment aux références suivantes:

- FR-A-2 149 519, WO-A-94 21 233, US-A-3,194,767, l'ouvrage "Fluorinated Surfactants", Erik Kissa, Editeur Marcel Dekker Inc. (1994) Chapitre 4, notamment les Tableaux 4.1 et 4.4.

On peut citer, en particulier, les produits vendus par la société Du Pont sous la dénomination ZONYL®, par exemple FSO, FSN-100, FS-300, FSD, ainsi que les tensioactifs fluorés de dénomination FORAFAC® distribués par la société DU PONT et les produits vendus sous la dénomination FLUORAD® par la Société 3M.

Parmi ces tensioactifs, on citera, en particulier, les composés perfluoroalkylés anioniques, cationiques, non-ioniques et amphotères, et parmi eux, plus particulièrement, les tensioactifs de la classe des ZONYL® commercialisés par DU Pont, commercialisés par Du Pont respectivement sous les dénominations ZONYL® FSA, ZONYL® FSO, ZONYL® FSC et ZONYL® FSK. On peut encore préciser à leur propos :

- ZONYL® FSO 100 : CAS 65545-80-4, (non-ionique) 99 à 100 %, le reste étant du 1,4-dioxane,
- ZONYL® FSN : CAS 65545-80-4, 99 à 100 %, le reste étant de l'acétate de sodium et du 1,4-dioxane,
- ZONYL® FS-300 : CAS 65545-80-4, 40 %, le reste étant de 1,4-dioxane (< 0,1%) et de l'eau
- ZONYL®FSD : CAS 70983-60-7 30 %, (cationique), le reste étant de l'hèxylèneglycol (10 %), du chlorure de sodium (3 %) et de l'eau (57 %).

On peut encore citer :

- les perfluoroalkyl bétaïnes (amphotères) telles que celle commercialisée par DU PONT sous la dénomination FORAFAC® 1157, les polyfluoroalcools éthoxylés (non-ioniques), tels que celui commercialisé par DU PONT sous la dénomination FORAFAC 1110 D, les sels polyfluoroalkyl d'ammonium (cationiques), tels que celui commercialisé par DU PONT sous la dénomination FORAFAC 1179;
- les agents tensioactifs dont la partie hydrophile contient un ou plusieurs motif(s) saccharide(s) contenant de 5 à 6 atomes de carbone (motifs dérivés de sucres comme le fructose, le glucose, le mannose, le galactose, le talose, le gulose, l'allose, l'altose, l'idose, l'arabinose, le xylose, le lyxose et/ou le ribose) et dont la partie hydrophobe contient un motif de formule $R^F(CH_2)_n$, où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les monoesters d'acides gras perfluoroalkylés et de sucres comme le sucrose, la fonction monoester pouvant être représentée par la formule $R^F(CH_2)_nC(O)$, où n peut aller de 2 à 10 et $R^F$ représente un motif perfluoroalkyle de formule $C_mF_{2m+1}$ avec m pouvant aller de 4 à 8, décrits dans journal of the american oil chemists' society (JAOCS), Vol. 69, no. 1 (janvier 1992) et choisis parmi ceux présentant les caractéristiques définies ci-dessus; et
- les polyélectrolytes présentant des groupements latéraux perfluoroalkyles gras tels que les polyacrylates présentant des groupements $R^F(CH_2)_n$ où n peut aller de 2 à 20, de préférence de 2 à 10 et $R^F$ représente un motif perfluoroalkyle de formule $C_mF_{2m+1}$ avec m pouvant aller de 1 à 10, de préférence de 4 à 8, choisis parmi ceux présentant les caractéristiques définies ci-dessus ; on peut mentionner les polyacrylates présentant des groupements $-CH_2C_7F_{15}$ décrits dans J. Chim. Phys. (1996) 93, 887-898 et choisis parmi ceux présentant les caractéristiques définies ci-dessus.

La quantité de tensioactif **(E)** est fonction du type de chacun des constituants en présence ainsi que de la nature même du tensioactif utilisé. En règle générale, l'émulsion comprend de 0,5 à 10% en poids de tensioactif par rapport au poids total de l'émulsion.

Par ailleurs, de manière classique et non limitative, on peut également mettre en œuvre dans les émulsions des additifs **(F)** tels que des polymères filmogènes, des adjuvants anti-mousses, des biocides, des modificateurs de rhéologie, des agents de coalescence, des agents dispersants, des agents acidifiants, neutralisants, des bases et/ou des agents épaississants seuls ou en mélange.

Les concentrations de tels adjuvants sont connues de l'homme du métier.

Les polyorganosiloxanes de la composition d'agent de démoulage **(I)** sont polymérisables et/ou réticulables par déshydrogéno-condensation. A cet effet, au moins un catalyseur de deshydrogenocondensation peut-etre utilisé. Le catalyseur de déshydrogéno-condensation **(G)** peut-être présent dans la composition selon l'invention. Sa présence n'est qu'optionnelle du fait des températures rencontrées dans le cadre de l'application. Des exemples de catalyseurs de déshydrogéno-condensation utilisables dans le cadre de l'invention sont les sels organométalliques, et les titanates tels que l'orthotitanate de tétrabutyle. A titre de sel organométallique, on peut mentionner le naphténate de zirconium et l'octylate de zirconium. On peut aussi utiliser un composé catalytique à l'étain, généralement un sel d'organoétain. Les sels d'organoétain utilisables sont décrits en particulier dans l'ouvrage de NOLL, Chemistry and Technology of Silicones Academic Press (1968), page 397. On peut également définir comme composé catalytique à l'étain, soit des distannoxanes, soit des polyorganostannoxanes, soit le produit de réaction d'un sel d'étain, en particulier d'un dicarboxylate d'étain sur du polysilicate d'éthyle, comme décrit dans le brevet US-A-3 862 919.

Le produit de réaction d'un silicate d'alkyle ou d'un alkyltrialcoxysilane sur le diacétate de dibutylétain comme décrit dans le brevet belge BE-A-842 305, peut convenir aussi.

Selon une autre possibilité, on peut avoir recours à un sel d'étain II, tel que $SnCl_2$ ou l'octoate stanneux. Le catalyseur peut être un sel d'étain d'un acide organique, tels que le diacétate de dibutylétain, le dilaurate de dibutylétain, le dilaurate de dioctylétain, le dioctate de dibutylétain, le naphténate de zinc, le naphténate de cobalt, l'octylate de zinc, l'octylate de cobalt et le di(isomercaptoacétate) de dioctylétain. Des exemples de sels d'étain tels que les bischélates d'étain sont décrits dans les demande de brevet EP-A-147 323 et EP-A-235 049, les dicarboxylates de diorganoétain et, en particulier, les catalyseurs sont décrits dans le brevet britannique GB-A-1 289 900 (diacétate de dibutyl- ou de dioctylétain, le dilaurate de dibutyl- ou de dioctylétain.

Des catalyseurs sans étain sont aussi décrits dans les demandes de brevet WO2010/146253, WO2010146254, WO2010/149869, WO2010/149870 et WO2013/004926.

Le catalyseur de déshydrogéno-condensation, lorsqu'il est présent, est généralement introduit dans l'émulsion à raison de 0,05 à 5 parties en poids, par rapport au poids total de l'émulsion.

L'eau **(H)** est présente, de préférence, dans des proportions comprises entre 20 et 90% et de préférence, entre 30 et 80% en poids par rapport au poids total de la composition.

Selon un autre mode de réalisation, la composition d'agent de démoulage (I) mis en œuvredans le procédé

de lubrification d'une vessie en caoutchouc dilatable comprend :

- de 0,1 à 30 parties en poids d'au moins un constituant **(A),**
- de 0,1 à 20 parties en poids d'au moins un constituant **(B),**
- de 0,1 à 30 parties en poids d'au moins un constituant **(C),**
- de 0,1 à 20 parties en poids d'au moins un constituant **(D),**
- de 0,1 à 10 parties en poids d'au moins un constituant **(E),**
- de 0 à 5 parties en poids des constituants **(F),**
- de 0 à 5 parties en poids d'au moins un constituant **(G),**
- de 20 à 90 parties en poids du constituant **(H);**

pour 100 parties en poids de la somme des constituants **(A)** à **(H).**

Selon un autre mode de réalisation préférentiel, la composition d'agent de démoulage (I) mis en œuvre dans le procédé de lubrification d'une vessie en caoutchouc dilatable comprend :

- de 1 à 20 parties en poids d'au moins un constituant **(A),**
- de 1 à 10 parties en poids d'au moins un constituant **(B),**
- de 1 à 20 parties en poids d'au moins un constituant **(C),**
- de 0,1 à 15 parties en poids d'au moins un constituant **(D),**
- de 0,1 à 10 parties en poids d'au moins un constituant **(E),**
- de 0 à 5 parties en poids des constituants **(F),**
- de 0 à 5 parties en poids d'au moins un constituant **(G),**
- de 30 à 80 parties en poids du constituant **(H);**

pour 100 parties en poids de la somme des constituants **(A)** à **(H).**

Les méthodes d'application des traitements sont bien connues de l'homme de l'art. On peut particulièrement les appliquer par pinceau, éponge, pulvérisation.
L'application par pulvérisation peut être effectuée en plusieurs passages afin de s'assurer que le revêtement est uniforme et homogène.

Plus particulièrement, l'invention concerne :

- une vessie en caoutchouc, dilatable, revêtue sur sa surface externe d'une composition (I) selon l'invention, pour le façonnage et la vulcanisation de pneus crus;
- une vessie en caoutchouc dilatable pouvant être obtenue par chauffage de la vessie dilatable définie ci-dessus, notamment entre 80 et 220° C, de préférence entre 150 et 200° C, de façon à assurer la réticulation totale des constituants réticulables de l'émulsion ;
- un pneu cru revêtu sur sa surface interne d'une composition lubrifiante (I) selon l'invention.

Un autre objet de la présente invention est de proposer un procédé de vulcanisation d'un pneu cru mettant en œuvre une vessie lubrifiée par le procédé selon l'invention.

Un dernier objet de la présente invention est de proposer des compositions d'agent de démoulage (I) caractérisées en ce qu'elles comprennent :

- de 0,1 à 30 parties en poids d'au moins un polyorganosiloxane réactif **(A)** comportant par molécule au moins deux groupements silanols ≡SiOH ;
- de 0,1 à 20 parties en poids d'au moins un agent réticulant **(B)** ayant, par molécule, au moins trois motifs ≡SiH ;
- de 0,1 à 30 parties en poids d'au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
- de 0,1 à 20 parties en poids de billes de verre **(D)** en tant que charge amorphe sphérique ;
- de 0,1 à 10 parties en poids d'au moins un tensioactif **(E)** ;
- de 0 à 5 parties en poids d'au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
- de 0 à 5 parties en poids d'au moins un catalyseur de déshydrogéno-condensation **(G);**
- de 20 à 90 parties en poids d'eau **(H);**

pour 100 parties en poids de la somme des constituants **(A)** à **(H).**

De préférence les compositions d'agent de démoulage (I) comprennent :

- de 1 à 20 parties en poids d'au moins un polyorganosiloxane réactif **(A)** comportant par molécule au moins deux groupements silanols ≡SiOH ;
- de 1 à 10 parties en poids d'au moins un agent réticulant **(B)** ayant, par molécule, au moins trois motifs ≡SiH ;
- de 1 à 20 parties en poids d'au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
- de 0,1 à 15 parties en poids de billes de verre **(D)** en tant que charge amorphe sphérique ;
- de 0,1 à 10 parties en poids d'au moins un tensioactif **(E)** ;
- de 0 à 5 parties en poids d'au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
- de 0 à 5 parties en poids d'au moins un catalyseur de déshydrogéno-condensation **(G);**
- de 30 à 80 parties en poids d'eau **(H);**

pour 100 parties en poids de la somme des constituants **(A)** à **(H).**

Les compositions selon l'invention sont stables dans le temps et les revêtements silicone préparés à partir des compositions selon l'invention présentent simultanément :

- un aspect de surface transparent,
- de bonne propriété de lubrification (Kd < 0.7),et
- une bonne résistance aux démoulages successifs.

D'autres avantages et caractéristiques de la présente invention apparaîtront à la lecture des exemples suivants donnés à titre illustratif nullement limitatif.

**EXEMPLES**

**1) <u>Matières premières utilisées</u>**

**Bluesil® Emulsion 242** vendue par la Sté Bluestar Silicones : émulsion d'huile α, ω-bis(hydroxy) polydimethylsiloxane de viscosité approximativement 135 000 mPa.s à 25°C **(A)** et comprenant un tensioactif **(E).**

**Bluesil® Emulsion 244** - Sté Bluestar Silicones : émulsion d'un mélange de gomme α, ω-bis(hydroxy) polydimethylsiloxane **(A)** de consistance approximativement 700 exprimé en dixième de millimètre à 25°C et d'huile polydimethylsiloxane **(C)** de viscosité approximativement 50 mPa.s à 25°C et comprenant un tensioactif **(E).**

**Bluesil® Emulsion 269** vendue par la Sté Bluestar Silicones : émulsion d'huile Méthyle hydrogeno polysiloxane de viscosité approximativement 25 $mm^2/s$ à 25°C **(B)** et comprenant un tensioactif (E).

**Spheriglass® 2530A CP01** vendue par la Sté Potters : billes de verre sodo calcique revêtue en surface par un agent de couplage, de diamètre moyen 56-70μm **(D)** mesuré selon la norme ISO 13320.

Spheriglass® **2000A CP01** vendue par la Sté Potters : billes de verre sodo calcique revêtue en surface par un agent de couplage, de diamètre moyen 27-36μm (D) mesuré selon la norme ISO 13320.

Spheriglass® **3000A CP01** vendue par la Sté Potters : billes de verre sodo calcique revêtue en surface par un agent de couplage, de diamètre moyen 12-26μm (D) mesuré selon la norme ISO 13320.

**Spheriglass® 3000E CP03** vendue par la Sté Potters : billes de verre borosilicate revêtue en surface par un agent de couplage, de diamètre moyen 12-26μm **(D)** mesuré selon la norme ISO 13320.

**Rhodopol® 23** vendue par la Sté Solvay Novecare : Gomme Xanthane, épaississant **(F). Rheozan®** vendue par la Sté Solvay Novecare : Gomme Succinoglycane, épaississant **(F). Imbentin® T/050** vendu par la Sté Dr Kolb : Isotrideceth 5, agent mouillant **(F).**

**Geropon® SDS** vendu par la Sté Solvay Novecare : Sodium dioctyl sulfosuccinate, agent mouillant **(F).**

**PEG 400** vendue par la Sté Sigma-Aldrich : Poly ethylene Glycol 400, agent mouillant **(F). Silcolapse® 5001** vendue par la Sté Bluestar Silicones : émulsion antimousse **(F). Silcolapse® 140** vendue par la Sté Bluestar Silicones : émulsion antimousse **(F).**

**Citrate de sodium** : régulateur de pH **(F).**

**Proxel® GXL** vendu par la Sté Arch Chemicals : 1, 2-benzisothiazolin-. 3-one, biocide **(F). Axilat® Ultra Green**

**DS2800** vendu par la Sté Hexion Chemicals: dispersion de polymère filmogène **(F)**

**Alsibronz® 39** vendu par la Sté Engelhard: mica, charge plaquettaire.

Les % indiqués ci-dessous sont en poids par rapport au poids total de la composition.

**2) Préparation des exemples**

**Exemple Comparatif 1 (C1) : Formulation sans billes de verre**

Dans un bêcher de 2 litres et de diamètre 120mm, réaliser un premier mélange (P1) :

- Introduire 52,22% d'eau (H) et agiter à 100 tours/mn à l'aide d'un disperseur équipé d'une turbine défloculeuse de diamètre 100mm ;
- Introduire ensuite 0,03% de Geropon® SDS (F), 0,9% PEG400 (F), 0,5% Silcolapse® 140 (F);
- Augmenter la vitesse à 600 tours/mn et introduire 0,23% Rheozan® (F) imbibé de 0,69% Imbentin® T/050 (F) ;
- Disperser pendant 10 mn à 600 tours/mn et arrêter le disperseur.

Parallèlement dans un bêcher de 1 litre et de diamètre 90mm, préparer un second mélange (P2) :

- introduire 22% Bluesil® Emulsion 244 (A & C) et agiter à 100 tours/mn à l'aide d'un disperseur équipé d'une ancre de diamètre 80mm puis,
- introduire 11,2% Bluesil® Emulsion 242 (A), 0,15% Proxel® GXL (F), 0,08% d'acide phosphorique (F), et homogénéiser pendant 5mn, et
- introduire 5% d'Axilat® Ultragreen DS2800 (F) et homogénéiser pendant 5mn et
- enfin introduire 7% Bluesil® Emulsion 269 (B).
- Homogénéiser pendant 5 mn

Enfin, introduire le mélange (P2) dans (P1) sous agitation à 300 tours/mn à l'aide d'un disperseur équipé d'une ancre de 80 mm de diamètre et homogénéiser pendant 30 mn. Après homogénéisation, on obtient ainsi la composition d'agent de démoulage (C1).

**Exemple Comparatif 2 (C2) : Formulation avec mica**

On procède comme dans l'exemple comparatif 1 mais 10% d'eau sont remplacés par 10% d'Alsibronz 39.

**Exemple selon l'invention (E1)**

On procède comme dans l'exemple comparatif 1 mais 10% d'eau sont remplacés par 10% de Spheriglass® 2530A CP01 (D).

**Exemple selon l'invention (E2)**

On procède comme dans l'exemple (E1) mais seulement 3% d'eau sont remplacés par 3% de Spheriglass® 2530A CP01 (D).

**Exemple selon l'invention (E3)**

On procède comme dans l'exemple (E1) mais les billes de verre Spheriglass® 2000A CP01 sont utlisées en remplacement de Spheriglass® 2530A CP01 (D).

**Exemple selon l'invention (E4)**

On procède comme dans l'exemple (E1) mais les billes de verre Spheriglass® 3000A CP01 sont utlisées en remplacement de Spheriglass® 2530A CP01 (D).

**Exemple selon l'invention (E5)**

On procède comme dans l'exemple (E1) mais seulement 3% d'eau sont remplacés par 3% de Spheriglass® 3000A CP01 (D).

**Exemple selon l'invention (E6)**

Dans un bêcher de 2 litres et de diamètre 120mm, réaliser un premier mélange (Q1) :

- Introduire 44,71 % d'eau (H) et agiter à 100 tours/mn à l'aide d'un disperseur équipé d'une turbine défloculeuse de diamètre 100mm ;
- Introduire ensuite 0,1% Imbentin® T/050 (F), 1,8% Silcolapse® 5001 (F) et 3% Spheriglass® 3000A CP01;
- Augmenter la vitesse à 600 tours/mn et introduire 0,25% Rhodopol®23 (F) imbibé de 0,5% Imbentin® T/050;
- Disperser pendant 10 mn à 600 tours/mn et arrêter le disperseur.

Parallèlement dans un bêcher de 1 litre et de diamètre 90mm, préparer un second mélange (Q2) :

- introduire 30% Bluesil® Emulsion 244 (A & C) et agiter à 100 tours/mn à l'aide d'un disperseur équipé d'une ancre de diamètre 80mm puis,
- introduire 7,47% Bluesil® Emulsion 242 (A), 0,04% de Citrate de sodium (F), 0,15% Proxel® GXL (F), 0,07% d'acide phosphorique (F), et homogénéiser pendant 5mn et
- enfin introduire 11,91% Bluesil® Emulsion 269 (B).
- Homogénéiser pendant 5 mn

Enfin, introduire le mélange (Q2) dans (Q1) sous agitation à 300 tours/mn à l'aide d'un disperseur équipé d'une ancre de 80 mm de diamètre et homogénéiser pendant 30 mn. Après homogénéisation on obtient la composition d'agent de démoulage (E6).

**Exemple selon l'invention (E7)**

Dans un bêcher de 2 litres et de diamètre 120mm, réaliser un premier mélange (Q3) :

- Introduire 47.45 % d'eau (H) et agiter à 100 tours/mn à l'aide d'un disperseur équipé d'une turbine défloculeuse de diamètre 100mm ;
- Introduire ensuite 0,1% Imbentin® T/050 (F), 1,8% Silcolapse® 5001 (F) et 3% Spheriglass® 3000E CP03;
- Augmenter la vitesse à 600 tours/mn et introduire 0,26% Rhodopol®23 (F) imbibé de 0,52% Imbentin® T/050;
- Disperser pendant 10 mn à 600 tours/mn et arrêter le disperseur.

Parallèlement dans un bêcher de 1 litre et de diamètre 90mm, préparer un second mélange (Q4) :

- introduire 30% Bluesil® Emulsion 244 (A & C) et agiter à 100 tours/mn à l'aide d'un disperseur équipé d'une ancre de diamètre 80mm puis,
- introduire 7,47% Bluesil® Emulsion 242 (A), 0,04% de Citrate de sodium (F), 0,15% Proxel® GXL (F), 0,07% d'acide phosphorique (F), et homogénéiser pendant 5mn et
- enfin introduire 9.14% Bluesil® Emulsion 269 (B).
- Homogénéiser pendant 5 mn

Enfin, introduire le mélange (Q4) dans (Q3) sous agitation à 300 tours/mn à l'aide d'un disperseur équipé d'une ancre de 80 mm de diamètre et homogénéiser pendant 30 mn. Après homogénéisation on obtient la composition d'agent de démoulage (E7).

**Exemple selon l'invention (E8)**

Dans un bêcher de 2 litres et de diamètre 120mm, réaliser un premier mélange (Q5) :

- Introduire 47.45 % d'eau (H) et agiter à 100 tours/mn à l'aide d'un disperseur équipé d'une turbine défloculeuse de diamètre 100mm ;
- Introduire ensuite 0,1% Imbentin® T/050 (F), 1,8% Silcolapse® 5001 (F) et 3% Spheriglass® 3000A CP03;
- Augmenter la vitesse à 600 tours/mn et introduire 0,26% Rhodopol®23 (F) imbibé de 0,52% Imbentin® T/050;
- Disperser pendant 10 mn à 600 tours/mn et arrêter le disperseur.

Parallèlement dans un bêcher de 1 litre et de diamètre 90mm, préparer un second mélange (Q6) :

- introduire 30% Bluesil® Emulsion 244 (A & C) et agiter à 100 tours/mn à l'aide d'un disperseur équipé d'une ancre de diamètre 80mm puis,
- introduire 7,47% Bluesil® Emulsion 242 (A), 0,04% de Citrate de sodium (F), 0,15% Proxel® GXL (F), 0,07% d'acide phosphorique (F), et homogénéiser pendant 5mn et
- enfin introduire 9.14% Bluesil® Emulsion 269 (B).
- Homogénéiser pendant 5 mn

Enfin, introduire le mélange (Q6) dans (Q5) sous agitation à 300 tours/mn à l'aide d'un disperseur équipé d'une ancre de 80 mm de diamètre et homogénéiser pendant 30 mn.
Après homogénéisation on obtient la composition d'agent de démoulage (E8).

**3) Tests de caractérisation**

Les propriétés des compositions sont mesurées par évaluation des coefficients de friction et le nombre de démoulages réalisés sans défaut.
Un coefficient de friction faible reflète de bonnes propriétés de glissement.
Un nombre de démoulages élevé reflète une durabilité élevée de la lubrification de la vessie.
Les tests de mesure des coefficients de friction et de la durabilité ont été adaptés à l'application de la composition lubrifiante sur vessie dilatable en caoutchouc.

**Test de glissement**

L'objectif de ce test est d'apprécier le pouvoir glissant d'une composition d'agent de démoulage placée à l'interface entre la vessie dilatable et la surface interne de l'enveloppe d'un pneumatique.
Ce test est réalisé en faisant glisser sur une surface de caoutchouc, dont la composition est celle de la vessie dilatable, un patin métallique de poids déterminé, sous lequel est fixé un film d'enveloppe de pneumatique (50 x 75 mm).
La surface de la vessie dilatable est préalablement revêtue par la composition d'agent de démoulage.
Le coefficient de friction est mesuré à l'aide d'un tensiomètre (à la vitesse de 50 mm/min). Cinq passages successifs sont réalisés sur le même échantillon de vessie dilatable en changeant à chaque fois l'échantillon d'enveloppe de pneumatique.
Le coefficient de friction (Kd) correspond à :

$$\text{Kd (sans dimension)} = \frac{\text{Force moyenne pour entraîner le patin (en N)}}{\text{Poids du patin (en N)}}$$

La valeur de Kd mentionné dans le tableau 1 correspond à la moyenne des valeurs obtenues lors des 5 passages.
Plus les valeurs du coefficient de friction sont faibles et meilleures seront les propriétés de glissement de la composition lubrifiante.
Ce test de glissement est parfaitement représentatif des performances à atteindre sur l'outil industriel, c'est un premier critère de sélection.

**Test de démoulage** :

La durabilité d'une composition lubrifiante correspond au nombre de pneumatiques réalisés sans dégradation de la surface de la vessie dilatable.
Pour ce faire, un film de vessie dilatable, préalablement revêtu par la composition d'agent de démoulage à évaluer, est pressé au contact d'un film d'enveloppe de pneumatique, non vulcanisé, selon une série de cycles de pressions et de températures simulant les étapes de fabrication d'un pneumatique sur l'outil industriel.
Dans le détail, une feuille en caoutchouc, de composition identique à celui de la vessie et de taille 2mmx80mmx80mm est préparée dans une presse chauffante à 200°C pendant 30 minutes. La feuille est structurée en surface pour simuler la surface d'une vessie.
La feuille est revêtue en cabine de peinture par pulvérisation avec un pistolet à air comprimé de la composition d'agent de démoulage. On dépose une couche de 20 $\mu$m environ. Après séchage à l'air, l'ensemble est cuit à 170°C pendant au moins 10 minutes.
La feuille revêtue est placée dans un moule métallique dans une presse. Les plaques sont chauffées à 170°C. On laisse préchauffer la feuille pendant 5 minutes, puis on dépose un morceau de caoutchouc ILR cru (« Inner Liner Rubber (ILR)» = caoutchouc qui constitue la surface interne d'un pneumatique cru) d'une épaisseur d'environ 9 cm sur

la feuille revêtue de la composition d'agent de démoulage. On ferme le moule, puis la presse et on laisse cuire le caoutchouc ILR pendant 7 minutes à 170°C. On ouvre le moule et on retire la fine feuille ILR moulée.

Pour qu'on considère qu'un démoulage est réussi, elle doit se séparer sans forcer ni accrocher. Sinon on note l'échec du démoulage.

Le nombre de démoulages correspond au nombre de feuilles ILR démoulées sans accroche.

**3) Résultats des tests** : Tableau 1

| Ref. | Charge | Charge Taille moyenne (µm) | Charge [%] | Nombre de démoulages | Coefficient de friction (Kd) | Aspect Film |
|---|---|---|---|---|---|---|
| **C1** | Pas de charge | NC | NC | 8 | 0,38 | Transparent |
| **C2** | Mica 39 | ~39 | 10 | 4 | 0,34 | Translucide |
| **E1** | Spheriglass® 2530A CP01 | 56 - 70 | 10 | 18 | 0,32 | Transparent |
| **E2** | Spheriglass® 2530A CP01 | 56 - 70 | 3 | 14 | 0,55 | Transparent |
| **E3** | Spheriglass® 2000A CP01 | 27 - 36 | 10 | 12 | 0,30 | Transparent |
| **E4** | Spheriglass® 3000A CP01 | 12 - 26 | 10 | 18 | 0,28 | Transparent |
| **E5** | Spheriglass® 3000A CP01 | 12 - 26 | 3 | 18 | 0,32 | Transparent |
| **E6** | Spheriglass® 3000A CP01 | 12 - 26 | 3 | 18 | 0,2 | Transparent |
| **E7** | Spheriglass® 3000E CP03 | 12 - 26 | 3 | 10 | 0,38 | Transparent |
| **E8** | Spheriglass® 3000A CP03 | 12 - 26 | 3 | 16 | 0,45 | Transparent |

Comparativement à l'exemple comparatif (C1) sans charge, l'ajout de mica dans une composition d'agent de démoulage telle que décrite dans la demande de brevet EP1899447 (exemple comparatif C2) dégrade de 50% le nombre de démoulages et donc la durabilité de la vessie.

Par contre, les exemples selon l'invention (E1 à E8) montrent sans ambiguïté que l'ajout de billes de verre permet d'augmenter le nombre de démoulages et donc la durabilité de la vessie de 1,25 à 2,25 fois par rapport à (C1) et de 2,5 à 4,5 fois par rapport à (C2) et cela simultanément à de bonnes propriétés de glissement.

En conclusion, l'utilisation de billes de verre, contrairement au mica, ne dégrade pas la durabilité de la vessie revêtue de la composition d'agent de démoulage selon l'invention.

Par ailleurs, contrairement au mica, les formulations à base de billes de verre conduisent à des films transparents.

## Revendications

1. Procédé de lubrification d'une vessie en caoutchouc dilatable utile lors d'une vulcanisation d'un pneu cru au sein d'une presse métallique, **caractérisé en ce que** la surface externe de la dite-vessie amenée à être en contact avec la face interne du dit-pneu cru est revêtue d'une composition d'agent de démoulage **(I)** sous forme d'émulsion huile dans eau comprenant :

    **(a)** au moins un polyorganosiloxane réactif **(A)** comportant par molécule au moins deux groupements silanols

≡SiOH ;

**(b)** au moins un agent réticulant **(B)** ayant, par molécule, au moins trois motifs ≡SiH ;

**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;

**(d)** de 0,1 à 20 parties en poids de billes de verre **(D)** en tant que charge amorphe sphérique, par rapport au poids total de la composition ;

**(e)** au moins un tensioactif **(E)** ;

**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;

**(g)** éventuellement au moins un catalyseur de déshydrogéno-condensation **(G),** et

**(h)** de l'eau **(H),**

les quantités de tensioactif(s) et d'eau étant suffisantes pour l'obtention d'une émulsion huile-dans-eau;
le dit-procédé permettant ainsi d'obtenir directement une vessie en caoutchouc dilatable lubrifiée sur sa surface externe et conduisant à plusieurs cycles de moulage de pneu cru et de démoulage de pneu vulcanisé.

**2.** Procédé de lubrification d'une vessie en caoutchouc dilatable utile lors d'une vulcanisation d'un pneu cru au sein d'une presse métallique, **caractérisé en ce que** dans une première étape à l'extérieur de la presse, la surface interne du dit-pneu cru est revêtue d'une composition d'agent de démoulage **(I)** sous forme d'émulsion huile dans eau comprenant :

**(a)** au moins un polyorganosiloxane réactif **(A)** comportant par molécule au moins deux groupements ≡SiOH ;

**(b)** au moins un agent réticulant **(B)** ayant, par molécule, au moins trois motifs ≡SiH ;

**(c)** au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;

**(d)** de 0,1 à 20 parties en poids de billes de verre **(D)** en tant que charge amorphe sphérique, par rapport au poids total de la composition ;

**(e)** au moins un tensioactif **(E)** ;

**(f)** éventuellement au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;

**(g)** éventuellement au moins un catalyseur de déshydrogéno-condensation **(G),** et

**(h)** de l'eau **(H),**

les quantités de tensioactif(s) et d'eau étant suffisantes pour l'obtention d'une émulsion huile-dans-eau ;
la dite-étape permettant ainsi d'obtenir un pneu cru dont la surface interne est revêtue de la dite-composition **(I)** et lors d'une étape ultérieure au sein de la presse métallique, le pneu cru dont la surface interne est revêtue de la composition **(I)** est mis en contact avec une vessie en caoutchouc dilatable;
le dit-procédé permettant ainsi d'obtenir par transfert une vessie en caoutchouc dilatable lubrifiée sur sa face externe et conduisant à plusieurs cycles de moulage de pneu cru et de démoulage de pneu vulcanisé.

**3.** Procédé selon l'une quelconque des revendications 1 ou 2, caractérisé en que les billes de verre **(D)** de la composition d'agent de démoulage **(I)** présentent les caractéristiques suivantes :

- un diamètre moyen des particules mesuré selon la norme ISO 13320 compris entre 0,1 et 150 μm,
- une densité apparente mesurée selon ASTM D 3101-78 comprise entre 1000 et 2000 kg/$m^3$, et
- une absorption d'huile mesurée selon ASTM D-1483 comprise entre 10 et 30 g d'huile pour 100g de sphères.

**4.** Procédé selon l'une quelconque des revendications 1 ou 2, caractérisé en que les billes de verre **(D)** de la composition d'agent de démoulage **(I)** présentent les caractéristiques suivantes :

- un diamètre moyen des particules mesuré selon la norme ISO 13320 compris entre 0,5 et 100 μm,
- une densité apparente selon ASTM D 3101-78 comprise entre 1200 et 1800 kg/$m^3$, et
- une absorption d'huile selon ASTM D-1483 comprise entre 15 et 25 g d'huile pour 100g de sphères.

**5.** Procédé selon l'une quelconque des revendications 1 ou 2, caractérisé en que le polyorganosiloxane réactif **(A)** de la composition d'agent de démoulage **(I)** comprend les motifs siloxyles suivants :

$$M^{OH} = [(OH)(R^2)_2SiO_{1/2}]$$

et

$$D= [R^3R^4SiO_{2/2}]$$

dans lesquels :

- $R^2$, $R^3$ et $R^4$ sont des radicaux, identiques ou différents, choisis parmi le groupe constitué par :
    - les radicaux alkyles linéaires ou ramifiés en $C_1$-$C_6$
    - les radicaux cycloalkyles en $C_3$-$C_8$,
    - les radicaux aryles en $C_6$-$C_{10}$ et
    - les radicaux alkylaryles en $C_7$-$C_{15}$.

**6.** Procédé selon l'une quelconque des revendications 1 ou 2, caractérisé en que le polyorganosiloxane réactif **(A)** de la composition d'agent de démoulage **(I)** est un α, ω-bis (hydroxy) polydimethylsiloxane.

**7.** Procédé selon l'une quelconque des revendications 1 ou 2, caractérisé en que l'agent réticulant **(B)** de la composition d'agent de démoulage **(I)** est choisi parmi ceux qui possèdent au moins un motif de formule (II) et qui sont terminés par des motifs de formule (III) ou cycliques constitués de motifs de formule (II) représentées ci-dessous :

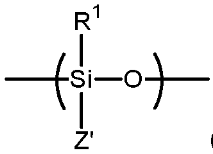 (II) 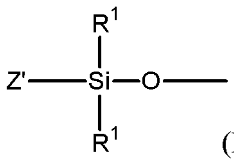 (III)

dans lesquelles :

- les symboles $R^1$, sont identiques ou différents et représentent :
    - un radical alkyle linéaire ou ramifié contenant 1 à 8 atomes de carbone, non substitué ou substitué par au moins un fluor,
    - un radical cycloalkyle contenant entre 5 et 8 atomes de carbone cycliques, ou
    - un radical aryle contenant entre 6 et 12 atomes de carbone,
    - une radical aralkyle ayant une partie alkyle contenant entre 5 et 14 atomes de carbone et une partie aryle contenant entre 6 et 12 atomes de carbone, non substitué ou substitué sur la partie aryle par des halogènes, des alkyles et/ou des alcoxyles contenant 1 à 3 atomes de carbone,
- les symboles Z' sont semblables ou différents et représentent :
    - un radical hydrogène, ou
    - un groupement répondant à la même définition que celle donnée ci-dessus pour $R^1$,

avec par molécule, au moins trois des symboles Z' représentant H.

**8.** Procédé selon l'une quelconque des revendications 1 ou 2, caractérisé en que la composition d'agent de démoulage **(I)** comprend :

- de 0,1 à 30 parties en poids d'au moins un constituant **(A),**
- de 0,1 à 20 parties en poids d'au moins un constituant **(B),**
- de 0,1 à 30 parties en poids d'au moins un constituant **(C),**
- de 0,1 à 20 parties en poids d'au moins un constituant **(D),**
- de 0,1 à 10 parties en poids d'au moins un constituant **(E),**
- de 0 à 5 parties en poids des constituants **(F),**
- de 0 à 5 parties en poids d'au moins un constituant **(G),**
- de 20 à 90 parties en poids du constituant **(H);**

pour 100 parties en poids de la somme des constituants **(A)** à **(H).**

**9.** Vessie dilatable lubrifiée susceptible d'être obtenu par le procédé tel que décrit selon l'une quelconque des revendications 1 à 8.

**10.** Procédé de vulcanisation d'un pneu cru **caractérisé en ce qu'**il met en œuvre une vessie lubrifiée telle que décrite dans la revendication 9.

**11.** Composition d'agent de démoulage **(I) caractérisée en ce qu'**elle comprend :

- de 0,1 à 30 parties en poids d'au moins un polyorganosiloxane réactif **(A)** comportant par molécule au moins deux groupements silanols ≡SiOH ;
- de 0,1 à 20 parties en poids d'au moins un agent réticulant **(B)** ayant, par molécule, au moins trois motifs ≡SiH ;
- de 0,1 à 30 parties en poids d'au moins une huile polyorganosiloxane linéaire non réactive **(C)** qui est un homopolymère ou un copolymère linéaire qui, par molécule, a des substituants organiques monovalents, identiques ou différents entre eux, liés aux atomes de silicium, et qui sont choisis parmi le groupe constitué par les radicaux alkyles en $C_1$-$C_6$, cycloalkyles en $C_3$-$C_8$, aryles en $C_6$-$C_{10}$ et alkylaryles en $C_7$-$C_{15}$ ;
- de 0,1 à 20 parties en poids d'au moins de billes de verre **(D)** en tant que charge amorphe sphérique ;
- de 0,1 à 10 parties en poids d'au moins un tensioactif **(E)** ;
- de 0 à 5 parties en poids d'au moins un additif **(F)** choisi parmi le groupe constitué par : un polymère filmogène, un lubrifiant complémentaire, un agent anti-friction, un agent de coalescence, un agent mouillant ou dispersant, une charge minérale, un agent anti-mousse, un épaississant, un stabilisant, un agent acidifiant, un biocide et un antifongique ;
- de 0 à 5 parties en poids d'au moins un catalyseur de déshydrogéno-condensation **(G);**
- de 20 à 90 parties en poids d'eau **(H);**

pour 100 parties en poids de la somme des constituants **(A)** à **(H).**

## Patentansprüche

**1.** Verfahren zur Schmierung einer dehnfähigen Kautschukblase, welche bei einer Vulkanisation eines rohen Luftreifens in einer Metallpresse von Nutzen ist, **dadurch gekennzeichnet, dass** die Außenfläche der Blase, die mit der Innenfläche des rohen Luftreifens in Kontakt gebracht wird, mit einer Entformungsmittelzusammensetzung **(I)** beschichtet ist, die in Form einer Öl-in-Wasser-Emulsion vorliegt, welche Folgendes umfasst:

**(a)** mindestens ein reaktionsfähiges Polyorganosiloxan **(A) ,** das pro Molekül mindestens zwei Silanolgruppen =SiOH aufweist;
**(b)** mindestens ein Vernetzungsmittel **(B),** das pro Molekül mindestens drei Bausteine =SiH hat;
**(c)** mindestens ein nicht reaktionsfähiges geradkettiges Polyorganosiloxanöl **(C),** bei welchem es sich um ein geradkettiges Homopolymer oder Copolymer handelt, das pro Molekül einbindige organische Substituenten aufweist, die untereinander vollkommen gleichartig oder verschiedenartig sind, wobei sie aus der Gruppe ausgewählt sind, welche aus den Resten des Typs $C_1$-$C_6$-Alkyl, $C_3$-$C_8$-Cycloalkyl, $C_6$-$C_{10}$-Aryl und $C_7$-$C_{15}$-Alkylaryl besteht;
**(d)** 0,1 bis 20 Gewichtsteile an Glaskügelchen **(D)** als kugelförmiger amorpher Füllstoff, bezogen auf das Gesamtgewicht der Zusammensetzung;
**(e)** mindestens ein Tensid **(E);**
**(f)** möglicherweise mindestens ein Additiv **(F),** das aus der Gruppe ausgewählt ist, welche aus den folgenden besteht: einem filmbildenden Polymer, einem ergänzenden Schmiermittel, einem reibungsmindernden Mittel,

einem Koaleszenzmittel, einem Netzmittel oder Dispergiermittel, einem mineralischen Füllstoff, einem Schaumverhüter, einem Verdickungsmittel, einem Stabilisator, einem Säuerungsmittel, einem Biozid und einem pilzbekämpfenden Mittel;
**(g)** möglicherweise mindestens einen Katalysator für eine Kondensation unter Wasserstoffabspaltung **(G),** und
**(h)** Wasser **(H),**

wobei die Mengen an Tensid(en) und an Wasser ausreichen, um eine Öl-in-Wasser-Emulsion zu erzielen;
wobei es das Verfahren auf diese Weise ermöglicht, auf direkte Weise eine dehnfähige Kautschukblase zu erhalten, die auf ihrer Außenfläche geschmiert ist und zu mehreren Zyklen des Formens eines rohen Luftreifens und des Entformens eines vulkanisierten Luftreifens führt.

**2.** Verfahren zur Schmierung einer dehnfähigen Kautschukblase, welche bei einer Vulkanisation eines rohen Luftreifens in einer Metallpresse von Nutzen ist, **dadurch gekennzeichnet, dass** in einem ersten Schritt, der außerhalb der Presse abläuft, die Innenfläche des rohen Luftreifens mit einer Entformungsmittelzusammensetzung **(I)** beschichtet wird, die in Form einer Öl-in-Wasser-Emulsion vorliegt, welche Folgendes umfasst:

**(a)** mindestens ein reaktionsfähiges Polyorganosiloxan **(A),** das pro Molekül mindestens zwei Gruppen =SiOH aufweist;
**(b)** mindestens ein Vernetzungsmittel **(B),** das pro Molekül mindestens drei Bausteine =SiH hat;
**(c)** mindestens ein nicht reaktionsfähiges geradkettiges Polyorganosiloxanöl **(C),** bei welchem es sich um ein geradkettiges Homopolymer oder Copolymer handelt, das pro Molekül einbindige organische Substituenten aufweist, die untereinander gleichartig oder verschiedenartig sind, wobei sie aus der Gruppe ausgewählt sind, welche aus den Resten des Typs $C_1$-$C_6$-Alkyl, $C_3$-$C_8$-Cycloalkyl, $C_6$-$C_{10}$-Aryl und $C_7$-$C_{15}$-Alkylaryl besteht;
**(d)** 0,1 bis 20 Gewichtsteile an Glaskügelchen **(D)** als kugelförmiger amorpher Füllstoff, bezogen auf das Gesamtgewicht der Zusammensetzung;
**(e)** mindestens ein Tensid **(E);**
**(f)** möglicherweise mindestens ein Additiv **(F),** das aus der Gruppe ausgewählt ist, welche aus den folgenden besteht: einem filmbildenden Polymer, einem ergänzenden Schmiermittel, einem reibungsmindernden Mittel, einem Koaleszenzmittel, einem Netzmittel oder Dispergiermittel, einem mineralischen Füllstoff, einem Schaumverhüter, einem Verdickungsmittel, einem Stabilisator, einem Säuerungsmittel, einem Biozid und einem pilzbekämpfenden Mittel;
**(g)** möglicherweise mindestens einen Katalysator für Kondensationen unter Wasserstoffabspaltung **(G),** und
**(h)** Wasser **(H),**

wobei die Mengen an Tensid(en) und an Wasser ausreichen, um eine Öl-in-Wasser-Emulsion zu erzielen;
wobei der Schritt es auf diese Weise ermöglicht, einen rohen Luftreifen zu erhalten, dessen Innenfläche mit der Zusammensetzung **(I)** beschichtet ist, und
der rohe Luftreifen, dessen Innenfläche mit der Zusammensetzung **(I)** beschichtet ist, in einem nachgeschalteten Schritt innerhalb der Metallpresse mit einer dehnfähigen Kautschukblase in Kontakt gebracht wird;
wobei es das Verfahren auf diese Weise ermöglicht, durch Übertragung eine dehnfähige Kautschukblase zu erhalten, die auf ihrer Außenfläche geschmiert ist und zu mehreren Zyklen des Formens eines rohen Luftreifens und des Entformens eines vulkanisierten Luftreifens führt.

**3.** Verfahren nach einem beliebigen der Ansprüche 1 oder 2, **dadurch gekennzeichnet, dass** die Glaskügelchen **(D)** der Entformungsmittelzusammensetzung **(I)** die folgenden Eigenschaftsmerkmale aufweisen:

- einen mittleren Partikeldurchmesser, gemessen gemäß der Norm ISO 13320, im Bereich von 0,1 bis 150 $\mu$m,
- eine scheinbare Dichte, gemessen gemäß ASTM D 3101-78 im Bereich von 1.000 bis 2.000 kg/$m^3$, und
- eine Ölabsorption, gemessen nach ASTM D-1483, im Bereich von 10 bis 30 g Öl auf 100 g an Kugeln.

**4.** Verfahren nach einem beliebigen der Ansprüche 1 oder 2, **dadurch gekennzeichnet, dass** die Glaskügelchen **(D)** der Entformungsmittelzusammensetzung **(I)** die folgenden Eigenschaftsmerkmale aufweisen:

- einen mittleren Partikeldurchmesser, gemessen gemäß der Norm ISO 13320, im Bereich von 0,5 bis 100 $\mu$m,
- eine scheinbare Dichte, gemessen gemäß ASTM D 3101-78 im Bereich von 1.200 bis 1.800 kg/$m^3$, und
- eine Ölabsorption, gemessen nach ASTM D-1483, im Bereich von 15 bis 25 g Öl auf 100 g an Kugeln.

**5.** Verfahren nach einem beliebigen der Ansprüche 1 oder 2, **dadurch gekennzeichnet, dass** das reaktionsfähige

Polyorganosiloxan **(A)** der Entformungsmittelzusammensetzung **(I)** die folgenden Siloxylbausteine umfasst:

$M^{OH} = [(OH)(R^2)_2SiO_{1/2}]$

und

$D= [R^3R^4SiO_{2/2}]$

wobei:

- $R^2$, $R^3$ und $R^4$ für gleichartige oder verschiedenartige Reste stehen, die aus der Gruppe ausgewählt sind, welche aus den folgenden besteht:

  - geradkettigen oder verzweigten $C_1$-$C_6$-Alkylresten,
  - $C_3$-$C_8$-Cycloalkylresten,
  - $C_6$-$C_{10}$-Arylresten und
  - $C_7$-$C_{15}$-Alkylarylresten.

**6.** Verfahren nach einem beliebigen der Ansprüche 1 oder 2, **dadurch gekennzeichnet, dass** es sich bei dem reaktionsfähigen Polyorganosiloxan **(A)** der Entformungsmittelzusammensetzung **(I)** um ein $\alpha,\omega$-bis-(Hydroxy)polydimethylsiloxan handelt.

**7.** Verfahren nach einem beliebigen der Ansprüche 1 oder 2, **dadurch gekennzeichnet, dass** das Vernetzungsmittel **(B)** der Entformungsmittelzusammensetzung **(I)** aus denjenigen ausgewählt ist, die mindestens einen Baustein der Formel (II) besitzen und die mit Bausteinen der Formel (III) oder zyklischer Art enden, welche aus Bausteinen der Formel (II) bestehen, wie sie nachstehend dargestellt sind:

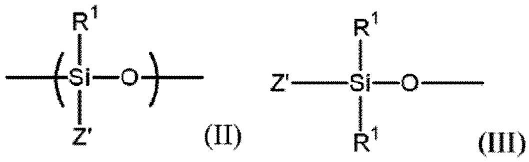
(II) (III)

wobei:

- die Formelzeichen $R^1$ gleichartig oder verschiedenartig sind und für Folgendes stehen:

  - einen geradkettigen oder verzweigten Alkylrest, der 1 bis 8 Kohlenstoffatome enthält und unsubstituiert oder mit mindestens einem Fluor substituiert ist,
  - einen Cycloalkylrest, der zwischen 5 und 8 ringständige Kohlenstoffatome enthält, oder
  - einen Arylrest, der 6 bis 12 Kohlenstoffatome enthält,
  - einen Aralkylrest mit einem Alkylabschnitt, der zwischen 5 und 14 Kohlenstoffatome enthält, und einem Arylabschnitt, der zwischen 6 und 12 Kohlenstoffatome enthält, wobei er unsubstituiert oder am Arylabschnitt mit Halogenen, mit Alkylen und/oder mit Alkoxylen, die 1 bis 3 Kohlenstoffatome enthalten, substituiert ist,

- die Formelzeichen Z' gleichartig oder verschiedenartig sind und für Folgendes stehen:

  - einen Wasserstoffrest, oder
  - eine Gruppe, welche derselben Begriffsbestimmung entspricht, wie sie oben für $R^1$ angegeben wurde,

wobei pro Molekül mindestens drei der Formelzeichen Z' für H stehen.

**8.** Verfahren nach einem beliebigen der Ansprüche 1 oder 2, **dadurch gekennzeichnet, dass** die Entformungsmittelzusammensetzung **(I)** Folgendes umfasst:

- 0,1 bis 30 Gewichtsteile mindestens eines Bestandteils **(A),**
- 0,1 bis 20 Gewichtsteile mindestens eines Bestandteils **(B),**

- 0,1 bis 30 Gewichtsteile mindestens eines Bestandteils **(C),**
- 0,1 bis 20 Gewichtsteile mindestens eines Bestandteils **(D),**
- 0,1 bis 10 Gewichtsteile mindestens eines Bestandteils **(E),**
- 0 bis 5 Gewichtsteile der Bestandteile **(F),**
- 0 bis 5 Gewichtsteile mindestens eines Bestandteils **(G),**
- 20 bis 90 Gewichtsteile des Bestandteils **(H);**

auf 100 Gewichtsteile der Summe der Bestandteile **(A)** bis **(H)**.

**9.** Geschmierte dehnfähige Blase, die mittels des Verfahrens, wie es in einem beliebigen der Ansprüche 1 bis 8 beschrieben ist, erhalten werden kann.

**10.** Verfahren zur Vulkanisierung eines rohen Luftreifens, **dadurch gekennzeichnet, dass** dabei eine geschmierte Blase gemäß der Beschreibung im Anspruch 9 zum Einsatz kommt.

**11.** Entformungsmittelzusammensetzung **(I), dadurch gekennzeichnet, dass** sie Folgendes umfasst:

- 0,1 bis 30 Gewichtsteile mindestens eines reaktionsfähigen Polyorganosiloxans **(A),** das pro Molekül mindestens zwei Silanolgruppen =SiOH aufweist;
- 0,1 bis 20 Gewichtsteile mindestens eines Vernetzungsmittels **(B),** das mindestens drei Bausteine =SiH pro Molekül hat;
- 0,1 bis 30 Gewichtsteile mindestens eines nicht reaktionsfähigen geradkettigen Polyorganosiloxanöls **(C),** bei welchem es sich um ein geradkettiges Homopolymer oder Copolymer handelt, das pro Molekül einbindige organische Substituenten aufweist, die untereinander vollkommen gleichartig oder verschiedenartig sind, wobei sie aus der Gruppe ausgewählt sind, welche aus den Resten des Typs $C_1$-$C_6$-Alkyl, $C_3$-$C_8$-Cycloalkyl, $C_6$-$C_{10}$-Aryl und $C_7$-$C_{15}$-Alkylaryl besteht;
- 0,1 bis 20 Gewichtsteile zumindest an Glaskügelchen **(D)** als kugelförmiger amorpher Füllstoff;
- 0,1 bis 10 Gewichtsteile mindestens eines Tensids **(E)** ;
- 0 bis 5 Gewichtsteile mindestens eines Additivs **(F),** das aus der Gruppe ausgewählt ist, welche aus den folgenden besteht: einem filmbildenden Polymer, einem komplementären Schmiermittel, einem reibungsmindernden Mittel, einem Koaleszenzmittel, einem Netzmittel oder Dispergiermittel, einem mineralischen Füllstoff, einem Schaumverhüter, einem Verdickungsmittel, einem Stabilisator, einem Säuerungsmittel, einem Biozid und einem pilzbekämpfenden Mittel;
- 0 bis 5 Gewichtsteile mindestens eines Katalysators für Kondensationen unter Wasserstoffabspaltung **(G);**
- 20 bis 90 Gewichtsteile an Wasser **(H);**

auf 100 Gewichtsteile der Summe der Bestandteile **(A)** bis **(H)**.

## Claims

**1.** Method for lubricating an expandable rubber bladder of use during a vulcanization of a green tyre within a metal press, **characterized in that** the outer surface of said bladder, brought to be in contact with the inner face of said green tyre, is coated with a mould release agent composition **(I)** in the form of an oil-in-water emulsion comprising:

**(a)** at least one reactive polyorganosiloxane **(A)** comprising, per molecule, at least two ≡SiOH silanol groups;
**(b)** at least one crosslinking agent **(B)** having, per molecule, at least three =SiH units;
**(c)** at least one non-reactive linear polyorganosiloxane oil **(C)** which is a linear homopolymer or copolymer which has, per molecule, monovalent organic substituents, which are identical to or different from one another, bonded to the silicon atoms, and which are selected from the group consisting of $C_1$-$C_6$ alkyl, $C_3$-$C_8$ cycloalkyl, $C_6$-$C_{10}$ aryl and $C_7$-$C_{15}$ alkylaryl radicals;
**(d)** from 0.1 to 20 parts by weight of glass beads **(D)** as spherical amorphous filler, relative to the total weight of the composition;
**(e)** at least one surfactant **(E);**
**(f)** optionally at least one additive **(F)** selected from the group consisting of: a film-forming polymer, a complementary lubricant, an antifriction agent, a coalescence agent, a wetting or dispersing agent, a mineral filler, an antifoam agent, a thickener, a stabilizer, an acidifying agent, a biocide and an antifungal agent;
**(g)** optionally at least one dehydrogenation-condensation catalyst **(G),** and

**(h)** water **(H),**

the amounts of surfactant(s) and of water being sufficient to obtain an oil-in-water emulsion;
said method making it possible thus to directly obtain an expandable rubber bladder that is lubricated on its outer surface and resulting in several green tyre moulding and vulcanized tyre demoulding cycles.

2. Method for lubricating an expandable rubber bladder of use during a vulcanization of a green tyre within a metal press, **characterized in that** in a first step outside of the press, the inner surface of said green tyre is coated with a mould release agent composition **(I)** in the form of an oil-in-water emulsion comprising:

**(a)** at least one reactive polyorganosiloxane **(A)** comprising, per molecule, at least two =SiOH groups;
**(b)** at least one crosslinking agent **(B)** having, per molecule, at least three =SiH units;
**(c)** at least one non-reactive linear polyorganosiloxane oil **(C)** which is a linear homopolymer or copolymer which has, per molecule, monovalent organic substituents, which are identical to or different from one another, bonded to the silicon atoms, and which are selected from the group consisting of $C_1$-$C_6$ alkyl, $C_3$-$C_8$ cycloalkyl, $C_6$-$C_{10}$ aryl and $C_7$-$C_{15}$ alkylaryl radicals;
**(d)** from 0.1 to 20 parts by weight of glass beads **(D)** as spherical amorphous filler, relative to the total weight of the composition;
**(e)** at least one surfactant **(E);**
**(f)** optionally at least one additive **(F)** selected from the group consisting of: a film-forming polymer, a complementary lubricant, an antifriction agent, a coalescence agent, a wetting or dispersing agent, a mineral filler, an antifoam agent, a thickener, a stabilizer, an acidifying agent, a biocide and an antifungal agent;
**(g)** optionally at least one dehydrogenation-condensation catalyst **(G),** and
**(h)** water **(H),**

the amounts of surfactant(s) and of water being sufficient to obtain an oil-in-water emulsion;
said step thus making it possible to obtain a green tyre, the inner surface of which is coated with said composition **(I)** and
during a subsequent step within the metal press, the green tyre, the inner surface of which is coated with said composition **(I),** is brought into contact with an expandable rubber bladder;
said method making it possible thus to obtain, by transfer, an expandable rubber bladder that is lubricated on its outer face and resulting in several green tyre molding and vulcanized tyre demolding cycles.

3. Method according to either one of Claims 1 and 2, **characterized in that** the glass beads **(D)** of the mould release agent composition **(I)** have the following features:

- a mean diameter of the particles measured according to the ISO 13320 standard of between 0.1 and 150 $\mu$m,
- a bulk density measured according to ASTM D 3101-78 of between 1000 and 2000 kg/$m^3$, and
- an oil absorption measured according to ASTM D-1483 of between 10 and 30 g of oil per 100 g of spheres.

4. Method according to either one of Claims 1 and 2, **characterized in that** the glass beads **(D)** of the mould release agent composition **(I)** have the following features:

- a mean diameter of the particles measured according to the ISO 13320 standard of between 0.5 and 100 $\mu$m,
- a bulk density according to ASTM D 3101-78 of between 1200 and 1800 kg/$m^3$, and
- an oil absorption according to ASTM D-1483 of between 15 and 25 g of oil per 100 g of spheres.

5. Method according to either one of Claims 1 and 2, **characterized in that** the reactive polyorganosiloxane **(A)** of the mould release agent composition **(I)** comprises the following siloxy units:

$$M^{OH} = [(OH)(R^2)_2SiO_{1/2}]$$

and

$$D= [R^3R^4SiO_{2/2}]$$

wherein:

- $R^2$, $R^3$ and $R^4$ are radicals, which are identical or different, selected from the group consisting of:

  - linear or branched $C_1$-$C_6$ alkyl radicals,
  - $C_3$-$C_8$ cycloalkyl radicals,
  - $C_6$-$C_{10}$ aryl radicals, and
  - $C_7$-$C_{15}$ alkylaryl radicals.

**6.** Method according to either one of Claims 1 and 2, **characterized in that** the reactive polyorganosiloxane **(A)** of the mould release agent composition **(I)** is an $\alpha,\omega$-bis(hydroxy)polydimethylsiloxane.

**7.** Method according to either one of Claims 1 and 2, **characterized in that** the crosslinking agent **(B)** of the mould release agent composition **(I)** is selected from those that have at least one unit of formula (II) and that are terminated by units of formula (III) or that are cyclic consisting of units of formula (II) represented below:

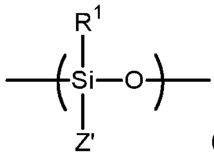 (II) 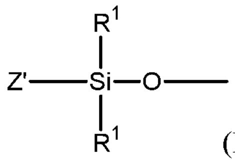 (III)

wherein:

- the $R^1$ symbols are identical or different and represent:

  - a linear or branched alkyl radical containing 1 to 8 carbon atoms, which is unsubstituted or which is substituted by at least one fluorine,
  - a cycloalkyl radical containing between 5 and 8 cyclic carbon atoms, or
  - an aryl radical containing between 6 and 12 carbon atoms,
  - an aralkyl radical having an alkyl part containing between 5 and 14 carbon atoms and an aryl part containing between 6 and 12 carbon atoms, which is unsubstituted or which is substituted on the aryl part by halogens, alkyls and/or alkoxyls containing 1 to 3 carbon atoms,

- the Z' symbols are similar or different and represent:

  - a hydrogen radical, or
  - a group corresponding to the same definition as that given above for $R^1$,

with, per molecule, at least three of the Z' symbols representing H.

**8.** Method according to either one of Claims 1 and 2, **characterized in that** the mould release agent composition **(I)** comprises:

- from 0.1 to 30 parts by weight of at least one constituent **(A),**
- from 0.1 to 20 parts by weight of at least one constituent **(B),**
- from 0.1 to 30 parts by weight of at least one constituent **(C),**
- from 0.1 to 20 parts by weight of at least one constituent **(D),**
- from 0.1 to 10 parts by weight of at least one constituent **(E),**
- from 0 to 5 parts by weight of the constituents **(F),**
- from 0 to 5 parts by weight of at least one constituent **(G),**
- from 20 to 90 parts by weight of the constituent **(H)**;

per 100 parts by weight of the sum of the constituents **(A)** to **(H).**

**9.** Lubricated expandable bladder capable of being obtained by the method as described according to any one of Claims 1 to 8.

**10.** Method for vulcanizing a green tyre, **characterized in that** it uses a lubricated bladder as described in Claim 9.

**11.** Mould release agent composition **(I), characterized in that** it comprises:

- from 0.1 to 30 parts by weight of at least one reactive polyorganosiloxane **(A)** comprising, per molecule, at least two =SiOH silanol groups;
- from 0.1 to 20 parts by weight of at least one crosslinking agent **(B)** having, per molecule, at least three =SiH units;
- from 0.1 to 30 parts by weight of at least one non-reactive linear polyorganosiloxane oil **(C)** which is a linear homopolymer or copolymer which has, per molecule, monovalent organic substituents, which are identical to or different from one another, bonded to the silicon atoms, and which are selected from the group consisting of $C_1$-$C_6$ alkyl, $C_3$-$C_8$ cycloalkyl, $C_6$-$C_{10}$ aryl and $C_7$-$C_{15}$ alkylaryl radicals;
- from 0.1 to 20 parts by weight of at least glass beads **(D)** as spherical amorphous filler;
- from 0.1 to 10 parts by weight of at least one surfactant **(E);**
- from 0 to 5 parts by weight of at least one additive **(F)** selected from the group consisting of: a film-forming polymer, a complementary lubricant, an antifriction agent, a coalescence agent, a wetting or dispersing agent, a mineral filler, an antifoam agent, a thickener, a stabilizer, an acidifying agent, a biocide and an antifungal agent;
- from 0 to 5 parts by weight of at least one dehydrogenation-condensation catalyst **(G);**
- from 20 to 90 parts by weight of water **(H);**

per 100 parts by weight of the sum of the constituents **(A)** to **(H)**.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 022706 A
- EP 1240283 A
- EP 1495076 A
- EP 2038354 A
- EP 1899447 A
- US 4840742 A
- GB 1082179 A
- FR 2149519 A
- WO 9421233 A
- US 3194767 A
- US 3862919 A
- BE 842305 A
- EP 147323 A
- EP 235049 A
- GB 1289900 A
- WO 2010146253 A
- WO 2010146254 A
- WO 2010149869 A
- WO 2010149870 A
- WO 2013004926 A


### Littérature non-brevet citée dans la description


- **ERIK KISSA.** Fluorinated Surfactants. 1994
- *J. Chim. Phys.,* 1996, vol. 93, 887-898
- Chemistry and Technology of Silicones. Academic Press, 1968, 397